# DEMANDE DE BREVET EUROPEEN

(11) **EP 4 403 348 A1**
(43) Date de publication de la demande: **24.07.2024**
(21) Numéro de dépôt: 24152601.1
(22) Date de dépôt: 18.01.2024
(51) Int. Cl.: B32B 5/02, B32B 5/08, B32B 5/12, B32B 5/14, B32B 5/26, B32B 7/02

(54) **ELÉMENT DE GARNISSAGE COMPRENANT DU POLYPROPYLÈNE SUR SA SURFACE EXTERNE**

(30) Priorité: 20.01.2023 FR 2300545
(71) Demandeur: Faurecia Intérieur Industrie, 92000 Nanterre (FR)
(72) Inventeur: BEYOU, Regis, 46182 LA CAÑADA PATERNA - VALENCIA (ES); QUESNEL, Benjamin, 46015 VALENCIA (ES)
(74) Mandataire: Lavoix

(57) **Abrégé**

L'élément de garnissage (1) de véhicule comprend un corps (2) s'étendant entre une surface interne (4), destinée à être tournée vers un support de l'élément de garnissage, et une surface externe (6), opposée à la surface interne (4) et destinée à être tournée vers l'habitacle du véhicule, ledit corps (2) étant formé à partir d'au moins un matériau non tissé ou tissé comprenant des fibres naturelles, un premier groupe de fibres de polypropylène présentant un premier indice de fluidité à chaud et un deuxième groupe de fibres de polypropylène présentant un deuxième indice de fluidité à chaud, inférieur au premier indice de fluidité à chaud, le polypropylène issu des fibres du premier groupe s'étendant principalement dans une couche supérieure (26) du corps (2), ladite couche supérieure (26) formant la surface externe (6) du corps (2).

## Description

La présente invention concerne un élément de garnissage de véhicule.

L'invention concerne également un procédé de réalisation d'un tel élément de garnissage.

L'invention s'applique par exemple à un élément de garnissage formant un panneau de porte, un revêtement de console centrale ou de planche de bord de véhicule ou autre.

Un tel élément de garnissage permet de conférer un aspect particulier à un habitacle de véhicule. Cet aspect est conféré par l'apparence de la surface externe, visible depuis l'habitacle, de l'élément de garnissage. Afin de conserver cette apparence, il est connu d'ajouter un film de polypropylène sur la surface externe du corps de l'élément de garnissage pour protéger celle-ci, par exemple d'un rayonnement ultraviolet et/ou de rayures, notamment lorsque le corps est réalisé à base de fibres naturelles. En effet, dans un tel élément de garnissage, on souhaite que les fibres naturelles soient visibles depuis l'extérieur de l'élément de garnissage, alors qu'elles sont relativement fragiles et que leur aspect se dégrade au cours du temps sous l'effet d'un rayonnement ultraviolet.

Le film peut également être utilisé pour modifier l'aspect de l'élément de garnissage en étant par exemple coloré ou pour produire un effet brillant.

Cependant, l'ajout d'un tel film augmente les coûts de l'élément de garnissage et en complique la réalisation.

L'un des buts de l'invention est de pallier cet inconvénient en proposant un élément de garnissage à base de fibres naturelles présentant un aspect satisfaisant et dont la fragilité de la surface externe est réduite.

A cet effet, l'invention concerne un élément de garnissage de véhicule comprenant un corps s'étendant entre une surface interne, destinée à être tournée vers un support de l'élément de garnissage, et une surface externe, opposée à la surface interne et destinée à être tournée vers l'habitacle du véhicule, ledit corps étant formé à partir d'au moins un matériau non tissé ou tissé comprenant des fibres naturelles, un premier groupe de fibres de polypropylène présentant un premier indice de fluidité à chaud et un deuxième groupe de fibres de polypropylène présentant un deuxième indice de fluidité à chaud, inférieur au premier indice de fluidité à chaud, le polypropylène issu des fibres du premier groupe s'étendant principalement dans une couche supérieure du corps, ladite couche supérieure formant la surface externe du corps.

Le polypropylène des fibres du premier groupe présentant un indice de fluidité à chaud supérieur a tendance à fluer vers la surface externe du corps au cours de la réalisation de l'élément de garnissage par thermoformage. Ainsi, le polypropylène issu des fibres du premier groupe forme une couche superficielle formant la surface externe du corps, ce qui protège les fibres naturelles du corps sans nécessiter l'ajout d'un film de polypropylène pour réaliser cette fonction de protection.

L'élément de garnissage selon l'invention peut comprendre l'une ou plusieurs des caractéristiques suivantes, prises isolément ou selon toute combinaison techniquement envisageable :
- le premier indice de fluidité à chaud est sensiblement compris entre [30g - 80g] /10 minutes ;
- le deuxième indice de fluidité à chaud est sensiblement compris entre [0,7g - 30g] /10 minutes ;
- la couche supérieure présente une épaisseur sensiblement comprise entre 0,01 mm et 0,8 mm ;
- le propylène issu des fibres du deuxième groupe s'étend principalement dans une couche inférieure du corps, ladite couche inférieure formant la surface interne du corps, la couche inférieure présentant une épaisseur supérieure à l'épaisseur de la couche supérieure ;
- les fibres naturelles sont choisies parmi au moins un du lin, du chanvre, du kénaf et/ou du bois ;
- la couche supérieure du corps comprend au moins additif conférant une fonction de protection contre un rayonnement ultraviolet et/ou contre les rayures à la surface externe du corps et/ou une coloration à la surface externe du corps.

Selon un autre aspect, l'invention concerne un procédé de réalisation d'un tel élément de garnissage, comprenant les étapes suivantes :
- fourniture d'au moins corps formé d'au moins une couche d'un matériau non tissé ou tissé comprenant des fibres naturelles, un premier groupe de fibres de polypropylène présentant un premier indice de fluidité à chaud et un deuxième groupe de fibres de polypropylène présentant un deuxième indice de fluidité à chaud, inférieur au premier indice de fluidité à chaud,
- thermoformage dudit corps de sorte à lui conférer la forme de l'élément de garnissage à réaliser, la température de chauffage du corps étant agencée pour entraîner la fusion des fibres de polypropylène du premier groupe et du deuxième groupe, le propylène issu des fibres du premier groupe s'écoulant vers la surface externe du corps.

Le procédé de réalisation selon l'invention peut comprendre l'une ou plusieurs des caractéristiques suivantes, prises isolément ou selon toute combinaison techniquement envisageable :
- le corps comprend une première couche formée par un matériau non tissé ou tissé comprenant des fibres naturelles et le premier groupe de fibres de polypropylène et une deuxième couche formée par un matériau non tissé ou tissé comprenant des fibres naturelles et le deuxième groupe de fibres de polypropylène, la première couche et la deuxième couche étant thermoformées et assemblées ensemble au cours de l'étape de thermoformage du corps ;
- le corps comprend en outre au moins une couche intermédiaire non tissée ou tissée, comprenant des fibres naturelles et/ou des fibres de polypropylène, ladite couche intermédiaire étant disposée entre la première couche et la deuxième couche et étant thermoformée et assemblée avec lesdites première et deuxième couches au cours de l'étape de thermoformage du corps.

D'autres aspects et avantages de l'invention apparaitront à la lecture de la description qui suit, donnée à titre d'exemple et faite en référence aux dessins annexés, dans lesquels :
[Fig 1] - la Fig. 1 est une représentation schématique en coupe d'un élément de garnissage selon l'invention, et
[Fig 2] - la Fig. 2 est une représentation schématique en perspective éclatée d'un corps d'élément de garnissage avant la réalisation de celui-ci selon un mode de réalisation du procédé de réalisation de l'élément de garnissage.

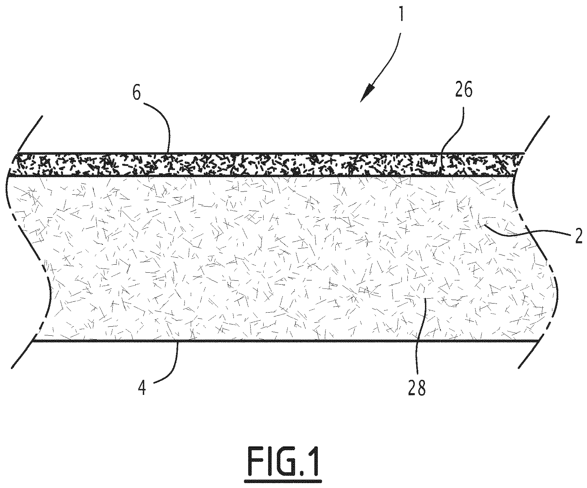

En référence à la Fig. 1, on décrit un élément de garnissage 1 comprenant un corps 2 s'étendant entre une surface interne 4 et une surface externe 6. Un tel élément de garnissage est par exemple destiné à former un panneau de porte, un revêtement de planche de bord ou de console centrale ou autre.

La surface interne 4 est destinée à être appliquée sur un support de l'élément de garnissage, c'est-à-dire vers une surface d'un élément que l'élément de garnissage doit revêtir, par exemple une tôle de porte, un corps de planche de bord ou de console centrale ou autre. La surface externe 6 est destinée à être tournée vers l'habitacle du véhicule et forme ainsi au moins une partie de la surface visible de l'élément de garnissage 1 lorsqu'il est installé dans le véhicule.

Dans ce qui suit, l'épaisseur est mesurée selon la direction allant de la surface interne 4 à la surface externe 6.

Le corps est formé à partir d'au moins un matériau non tissé ou tissé. Par non tissé, on entend un matériau comprenant des fibres entremêlées les unes avec les autres de façon non régulière, les fibres étant orientées de façon aléatoire. Un tel non tissé est par exemple réalisé par aiguilletage. Un tissé est un matériau comprenant des fibres entremêlées de façon régulière en formant par exemple des fils de chaîne et des fils de trame. Un tel tissé est obtenu par tissage.

Le matériau du corps, avant son thermoformage qui sera décrit ultérieurement, comprend des fibres naturelles, un premier groupe de fibres de polypropylène (PP) et un deuxième groupe de fibres de polypropylène. Un tel matériau est connu sous le nom de NFPP pour « Naturalfibres polypropylène » (fibres naturelles polypropylène).

Les fibres naturelles s'étendent dans toute l'épaisseur du corps 2, c'est-à-dire de la surface interne 4 à la surface externe 6. Les fibres naturelles sont par exemple choisies parmi au moins un du lin, du chanvre, du kénaf et/ou du bois. Des fibres naturelles de différentes natures, par exemple choisies parmi la liste précédente, peuvent également être mélangées dans le corps 2.

Le premier groupe de fibres de PP présente un premier indice de fluidité à chaud (IFC). L'indice de fluidité à chaud (ou melt flow index en anglais) permet de caractériser le polypropylène des fibres, ce qui fournit des informations sur les possibilités de transformation de la matière, notamment sur la façon dont la matière s'écoule lorsqu'elle est chauffée au-dessus de la température de fusion du PP. L'IFC est mesuré conformément à la norme ISO 1133 ou ASTM D1238. Selon un mode de réalisation, le premier IFC est par exemple supérieur à 30g/10 minutes à une température de 230°C pour une masse de 2.2 Kg, par exemple compris entre [30g - 80g] /10 minutes.

Selon un mode de réalisation, au moins un additif est ajouté au premier groupe de fibres de PP. Cet additif est agencé pour conférer une fonction de protection contre un rayonnement ultraviolet et/ou contre les rayures à la surface externe 6 du corps 2 et/ou une coloration à la surface externe 6 du corps, comme cela sera décrit ultérieurement.

Le deuxième groupe de fibres de PP présente un deuxième IFC inférieur au premier IFC. Selon un mode de réalisation, le deuxième IFC est par exemple inférieur à 30g/10 minutes à une température de 230°C pour une masse de 2.2 Kg, par exemple compris entre [0,7g - 30g] /10 minutes.

Selon un premier mode de réalisation, les fibres de PP du premier groupe et du deuxième groupe s'étendent également dans toute l'épaisseur du corps 2, c'est-à-dire que le corps 2 est formé à partir d'une unique couche comprenant les fibres naturelles et les fibres de PP du premier groupe et du deuxième groupe. Le matériau comprend par exemple une proportion égale de fibres naturelles et de fibres de PP. C'est-à-dire que le matériau est composé à 50% de fibres naturelles et de 50% de fibres de PP du premier groupe et du deuxième groupe. En variante, la proportion de fibres de PP varie entre 30% et 70% de fibres de PP. Selon ce mode de réalisation, les fibres naturelles présentent un poids sensiblement compris entre 90 gsm et 1200 gsm (gram square meter pour gramme par mètre carré) lorsque le corps 2 est formé à partir d'un non-tissé.

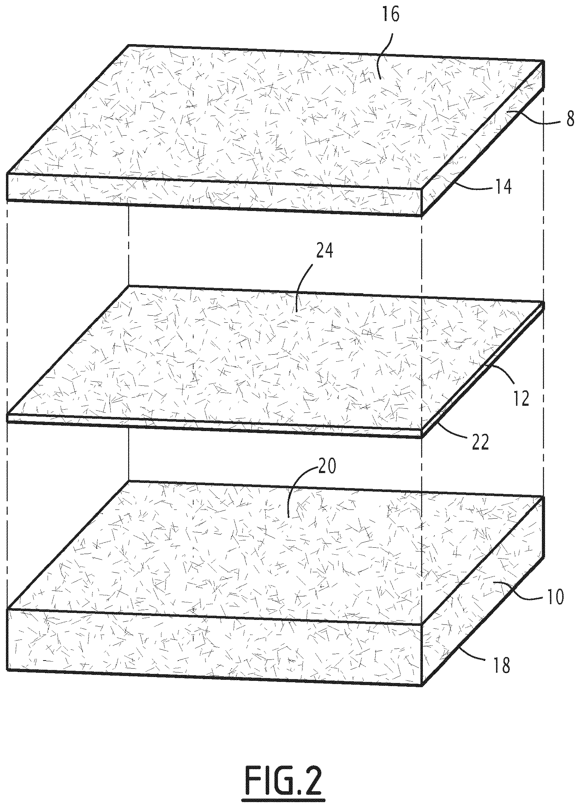

En variante, le corps est formé à partir de plusieurs couches assemblées entre elles au cours de la réalisation de l'élément de garnissage comme cela sera décrit plus en détail ultérieurement. Ainsi, comme représenté sur la Fig. 2, le corps 2 comprend au moins une première couche 8, comprenant des fibres naturelles et les fibres de PP du premier groupe, et une deuxième couche 10, comprenant des fibres naturelles et les fibres PP du deuxième groupe. Selon un mode de réalisation particulier représenté sur la Fig. 2, le corps 2 comprend en outre au moins une couche intermédiaire 12 s'étendant entre la première couche 8 et la deuxième couche 10.

La première couche 8 s'étend entre une surface inférieure 14 et une surface supérieure 16. La surface inférieure 14 s'étend sur la deuxième couche 10 ou, le cas échéant, sur la couche intermédiaire 12, et la surface supérieure 16 forme la surface externe 6 du corps 2. La première couche 8 est formée à partir d'un matériau non-tissé ou tissé. La première couche 8 comprend par exemple 50% de fibres naturelles et 50% de fibres de PP du premier groupe. En variante, la proportion de fibres de PP du premier groupe dans la première couche 8 est supérieure à 40%, jusqu'à 70% de fibres de PP du premier groupe. Lorsque la première couche 8 est formée d'un non-tissé, le poids des fibres naturelles est par exemple sensiblement compris entre 20 gsm et 300 gsm. L'épaisseur de la première couche 8 est par exemple sensiblement comprise entre 0,1 mm et 0,4 mm.

La deuxième couche 10 s'étend entre une surface inférieure 18 et une surface supérieure 20. La surface inférieure 18 forme la surface interne 4 du corps 2 et la surface supérieure 20 s'étend contre la surface inférieure 14 de la première couche 8 ou, le cas échéant, contre la couche intermédiaire 12. La deuxième couche 10 est formée à partir d'un matériau non-tissé ou tissé. La deuxième couche 10 comprend par exemple 50% de fibres naturelles et 50% de fibres de PP du deuxième groupe. En variante, la proportion de fibres de PP du deuxième groupe dans la deuxième couche10 est supérieure à 40%, jusqu'à 70% de fibres de PP du deuxième groupe. Lorsque la deuxième couche 10 est formée d'un non-tissé, le poids des fibres naturelles est par exemple sensiblement compris entre 200 gsm et 2000 gsm. L'épaisseur de la deuxième couche 10 est supérieure à celle de la première couche 8 et est par exemple sensiblement comprise entre 0,4 mm et 5 mm.

La couche intermédiaire 12 s'étend entre une surface inférieure 22 et surface supérieure 24. La surface inférieure 22 s'étend sur la surface supérieure 20 de la deuxième couche 10 et la surface supérieure 24 s'étend contre la surface inférieure 14 de la première couche 8. La couche intermédiaire 12 est par exemple formée d'un non-tissé comprenant des fibres de PP agencées pour augmenter la compatibilité de la première couche 8 et de la deuxième couche 10 lors de l'assemblage du corps 2. A cet effet, la couche intermédiaire 12 comprend par exemple des fibres de PP du premier groupe et du deuxième groupe entremêlées. En variante, la couche intermédiaire 12 est formée par un textile tissé de fibres naturelles, ce qui permet d'améliorer les caractéristiques mécaniques du corps 2 de l'élément de garnissage. Encore en variante, la couche intermédiaire 12 est formée d'un non-tissé comprenant des fibres naturelles et des fibres de PP par exemple du premier groupe et du deuxième groupe. L'épaisseur de la couche intermédiaire 12 est par exemple sensiblement comprise entre 0,1 mm et 0,5 mm.

Il est entendu que le corps 2 peut comprendre plus d'une couche intermédiaire 12.

Le procédé de réalisation de l'élément de garnissage 1 va à présent être décrit.

Au cours d'une étape préalable de calibrage, le corps 2 est calibré, c'est-à-dire découpé à des dimensions correspondant aux dimensions de l'élément de garnissage 1 à réaliser. Dans le cas d'un corps 2 formé de plusieurs couches, chaque couche est ainsi calibrée.

Le corps 2 est ensuite placé dans un outil de thermoformage agencé pour chauffer le corps 2 et pour conférer au corps 2 la forme de l'élément de garnissage 1. Un tel outil est par exemple formé de deux parties comprenant chacune une surface de formage, l'une présentant la forme de la surface interne 4 de l'élément de garnissage et l'autre de la surface externe 6. Le corps 2 est placé entre les deux surfaces de formage qui sont rapprochées l'une de l'autre de sorte à appliquer une pression et une température de chauffage au corps 2 afin de former l'élément de garnissage 1. Dans le cas d'un corps 2 comprenant plusieurs couches, les couches sont placées entre les deux parties de l'outil, la première couche 8 s'étendant du côté de la surface de formage présentant la forme de la surface externe 6 et la deuxième couche 10 s'étendant du côté de la surface de formage présentant la forme de la surface interne 4.

L'outil de thermoformage est agencé pour chauffer le corps 2 à une température supérieure à la température de fusion du PP du premier groupe et du deuxième groupe. Ainsi, au cours du thermoformage du corps 2, les fibres de PP du premier groupe et du deuxième groupe fondent et forment une matrice encapsulant les fibres naturelles. Du fait de la différence d'IFC, le PP issu des fibres du premier groupe s'écoule vers la surface externe 6 du corps 2, c'est-à-dire vers la surface de formage de l'outil de thermoformage présentant la forme de la surface externe 6 du corps 2. Ceci est dû à la différence de viscosités à iso-température, qui fait que la matière qui a la plus faible viscosité s'écoule plus facilement vers la surface de chauffe. Cet écoulement peut être favorisé en chauffant la surface de formage présentant la forme de la surface externe à une température différente, notamment supérieure à 180ºC, de la température de chauffage de la surface de formage présentant la forme de la surface interne du corps 2.

Au cours de l'étape de thermoformage, le corps 2 acquière ainsi la forme de l'élément de garnissage 1 et comprend des fibres naturelles encapsulée dans le PP issu des fibres du premier groupe et deuxième groupe. En outre, si le corps 2 comprend plusieurs couches, celles-ci sont assemblées entre elles par le mélange du PP des différentes couches.

Le corps 2 obtenu comprend une couche supérieure 26 formant la surface externe 6 de l'élément de garnissage 1 et dans laquelle la matrice encapsulant les fibres naturelles est formée principalement du PP issu des fibres de PP du premier groupe. Par principalement, on entend que le PP dans la couche supérieure 26 est à au moins 60% issu des fibres de PP du premier groupe. Selon un mode de réalisation, notamment lorsque le corps 2 comprend une première couche 8 et une deuxième couche 10, le PP dans la couche supérieure 26 est entièrement issu des fibres de PP du premier groupe. La couche supérieure 26 présente par exemple une épaisseur comprise entre 0,01 mm et 0,8 mm. Selon un mode de réalisation, la couche supérieure 26 présente une épaisseur égale à celle de la première couche 8. Le PP dans la couche supérieure 26 forme une couche superficielle formant la surface externe 6 du corps 2 et protégeant les fibres naturelles s'étendant dans le reste du corps 2. Cette couche superficielle laisse les fibres naturelles visibles au travers de la surface externe 6 tout en protégeant celles-ci d'un rayonnement ultraviolet et des rayures. Cette protection est encore améliorée lorsqu'au moins un additif est prévu avec les fibres de PP du premier groupe, comme décrit précédemment. En effet, ce ou ces additifs se retrouvent alors dans la couche supérieure 26 du corps 2 et notamment dans la couche superficielle, de sorte qu'ils confèrent à la surface externe 6 du corps 2 les fonctions de protection correspondantes. En variante ou en complément, la couche superficielle permet également de colorer la surface externe 6 du corps 2. En d'autres termes, les fonctions habituellement réalisées par l'ajout d'un film de PP sur un corps pour former un élément de garnissage sont réalisées, selon l'invention, par la couche superficielle du corps 2.

Le corps 2 obtenu comprend également une couche inférieure 28 formant la surface interne 4 de l'élément de garnissage 1 et dans laquelle la matrice encapsulant les fibres naturelles est formée principalement du PP issu des fibres de PP du deuxième groupe. Par principalement, on entend que le PP dans la couche inférieure 28 est à au moins 60% issu des fibres de PP du deuxième groupe. Selon un mode de réalisation, notamment lorsque le corps 2 comprend une première couche 8 et une deuxième couche 10, le PP dans la couche inférieure 28 est entièrement issu des fibres de PP du deuxième groupe. La couche inférieure 28 présente par exemple une épaisseur supérieure à l'épaisseur de la couche supérieure 26 et est par exemple comprise entre 0,1 mm et 5 mm. Selon un mode de réalisation, la couche inférieure 28 présente une épaisseur égale à celle de la deuxième couche 10.

L'élément de garnissage 1 décrit ci-dessus est particulièrement simple et économique à réaliser car il ne nécessite pas l'ajout d'un film supplémentaire pour former la surface externe de l'élément de garnissage.

## Revendications

1. Elément de garnissage (1) de véhicule comprenant un corps (2) s'étendant entre une surface interne (4), destinée à être tournée vers un support de l'élément de garnissage, et une surface externe (6), opposée à la surface interne (4) et destinée à être tournée vers l'habitacle du véhicule, ledit corps (2) étant formé à partir d'au moins un matériau non tissé ou tissé comprenant des fibres naturelles, un premier groupe de fibres de polypropylène présentant un premier indice de fluidité à chaud et un deuxième groupe de fibres de polypropylène présentant un deuxième indice de fluidité à chaud, inférieur au premier indice de fluidité à chaud, le polypropylène issu des fibres du premier groupe s'étendant principalement dans une couche supérieure (26) du corps (2), ladite couche supérieure (26) formant la surface externe (6) du corps (2).

2. Elément de garnissage selon la revendication 1, dans lequel le premier indice de fluidité à chaud est sensiblement compris entre [30g - 80g] /10 minutes.

3. Elément de garnissage selon la revendication 1 ou 2, dans lequel le deuxième indice de fluidité à chaud est sensiblement compris entre [0,7g - 30g] /10 minutes.

4. Elément de garnissage selon l'une quelconque des revendications 1 à 3, dans lequel la couche supérieure (26) présente une épaisseur sensiblement comprise entre 0,01 mm et 0,8 mm.

5. Elément de garnissage selon l'une quelconque des revendications 1 à 4, dans lequel le propylène issu des fibres du deuxième groupe s'étend principalement dans une couche inférieure (28) du corps (2), ladite couche inférieure (28) formant la surface interne (4) du corps (2), la couche inférieure (28) présentant une épaisseur supérieure à l'épaisseur de la couche supérieure (26).

6. Elément de garnissage selon l'une quelconque des revendications 1 à 5, dans lequel les fibres naturelles sont choisies parmi au moins un du lin, du chanvre, du kénaf et/ou du bois.

7. Elément de garnissage selon l'une quelconque des revendications 1 à 6, dans lequel la couche supérieure (28) du corps comprend au moins additif conférant une fonction de protection contre un rayonnement ultraviolet et/ou contre les rayures à la surface externe du corps et/ou une coloration à la surface externe (6) du corps (2).

8. Procédé de réalisation d'un élément de garnissage (1) selon l'une quelconque des revendications 1 à 7, comprenant les étapes suivantes :
- fourniture d'au moins corps (2) formé d'au moins une couche d'un matériau non tissé ou tissé comprenant des fibres naturelles, un premier groupe de fibres de polypropylène présentant un premier indice de fluidité à chaud et un deuxième groupe de fibres de polypropylène présentant un deuxième indice de fluidité à chaud, inférieur au premier indice de fluidité à chaud,
- thermoformage dudit corps (2) de sorte à lui conférer la forme de l'élément de garnissage à réaliser, la température de chauffage du corps (2) étant agencée pour entraîner la fusion des fibres de polypropylène du premier groupe et du deuxième groupe, le propylène issu des fibres du premier groupe s'écoulant vers la surface externe (6) du corps (2).

9. Procédé de réalisation selon la revendication 8, dans lequel le corps (2) comprend une première couche (8) formée par un matériau non tissé ou tissé comprenant des fibres naturelles et le premier groupe de fibres de polypropylène et une deuxième couche (10) formée par un matériau non tissé ou tissé comprenant des fibres naturelles et le deuxième groupe de fibres de polypropylène, la première couche (8) et la deuxième couche (10) étant thermoformées et assemblées ensemble au cours de l'étape de thermoformage du corps (2).

10. Procédé de réalisation selon la revendication 9, dans lequel le corps (2) comprend en outre au moins une couche intermédiaire (12) non tissée ou tissée, comprenant des fibres naturelles et/ou des fibres de polypropylène, ladite couche intermédiaire (12) étant disposée entre la première couche (8) et la deuxième couche (10) et étant thermoformée et assemblée avec lesdites première et deuxième couches (8, 10) au cours de l'étape de thermoformage du corps (2).
